# EUROPÄISCHE PATENTSCHRIFT

(11) **EP 2 199 247 B1**
(45) Veröffentlichungstag und Bekanntmachung des Hinweises auf die Patenterteilung: **14.08.2019**
(21) Anmeldenummer: 09012406.6
(22) Anmeldetag: 30.09.2009
(51) Int. Cl.: B66C 23/26, B66C 23/70, B66C 23/86, F16C 19/38

(54) **Drehverbindung**
Rotating connection
Liaison rotative

(30) Priorität: 19.12.2008 DE 202008016876 U
(43) Veröffentlichungstag der Anmeldung: 23.06.2010
(73) Patentinhaber: Liebherr-Werk Ehingen GmbH, 89584 Ehingen (DE)
(72) Erfinder: Willim, Hans-Dieter, 89079 Ulm-Unterweiler (DE)
(74) Vertreter: Laufhütte, Dieter

(56) Entgegenhaltungen:
- EP-A2- 0 945 393
- DE-A1- 3 723 961
- DE-A1- 19 607 683
- DE-C1- 10 039 573
- DE-C1- 10 112 293
- JP-A- H09 132 383
- US-A- 4 248 488
- US-A- 4 622 860

## Beschreibung

Die Erfindung betrifft eine Drehverbindung zur drehbaren Verbindung des Oberwagens mit dem Unterwagen eines Kranes.

Große Krane, wie insbesondere Raupenkrane, werden für den Transport in Einzelteile zerlegt. Zum Transport wird der Kran demnach demontiert. Es entstehen verschiedene Transporteinheiten, die gegebenenfalls mit speziellen Transportfahrzeugen im Straßenverkehr verfahren werden dürfen. Die für den Transport geltenden Vorschriften beziehen sich beispielsweise auf das Gewicht oder auch auf die Abmessungen.

Je nach Gewicht und Abmessung wird der Kran also in eine Mehrzahl von Teilen zerlegt, beispielsweise in den Oberwagen und verschiedene Teile des Unterwagens, sowie die jeweiligen Ausrüstungsteile. Ist nun ein Kran zu transportieren, bei dem beispielsweise sowohl der Oberwagen wie auch das Rahmenmittelteil des Unterwagens die im Straßenverkehr maximal zulässigen Gewichte erreichen, wird es notwendig, die zwischen dem Oberwagen und dem Rahmenmittelteil des Unterwagens angeordnete Drehverbindung mit den hier zugehörigen Antrieben getrennt zu transportieren

JP H09 132383 A beschreibt eine Drehverbindung gemäß dem Oberbegriff des Anspruchs 1 bzw. 6.

Die Aufgabe der Erfindung besteht nun darin, eine Drehverbindung der gattungsgemäßen Art für einen Kran, insbesondere einen Raupenkran, an die Hand zu geben, die sich schnell, einfach und zuverlässig sowohl mit dem Unterwagen wie auch mit dem Oberwagen des Krans verbinden und von diesem wieder lösen läßt, um separat transportiert werden zu können.

Erfindungsgemäß wird diese Aufgabe durch die Merkmale des Anspruchs 1 bzw. 6 gelöst.

Demnach ist eine Drehverbindung zur drehbaren Verbindung des Oberwagens mit dem Unterwagens eines Krans vorgesehen, wobei diese Drehverbindung erfindungsgemäß jeweils über eine Schnellkupplung mit dem Oberwagen einerseits und dem Unterwagen andererseits verbindbar ist.

Aufgrund dieser erfindungsgemäßen Trennbarkeit der Drehverbindung sowohl vom Oberwagen wie auch vom Unterwagen ist eine gute Transportierbarkeit und insbesondere eine Reduzierung der Transportgewichte der einzelnen Komponenten des Großkrans erreichbar. Darüber hinaus können die einzelnen Baugruppen des Krans optimal ausgeführt werden, um sehr hohe Traglasten des Krans zu erreichen. Über die Schnellkupplung ist eine schnelle und sichere Montage bzw. Demontage der Drehverbindung möglich.

Vorteilhafte Ausgestaltungen der Erfindung ergeben sich aus den sich an den Hauptanspruch anschließenden Unteransprüchen.

Demnach ist die Drehverbindung bevorzugt als Rollendrehverbindung ausgebildet. Derartige Rollendrehverbindungen können sehr hohe Traglasten aufnehmen.

Der Antrieb ist vorteilhaft aus mehreren hydraulischen Antriebseinheiten gebildet, die gemäß einer besonders vorteilhaften Ausgestaltung der Erfindung untereinander verbunden sind, so dass nur die Gesamtheit der Antriebe mit den Hydraulikleitungen des Oberwagens zu verbinden ist. Dies verkürzt die Montagezeit, da nicht jeder Einzelantrieb mit Hydraulikleitungen des Oberwagens verbunden werden muß.

Erfindungsgemäß ist die Drehverbindung als kreisrunder Drehkranz ausgebildet. Zur Ankupplung des Unterwagens und/oder zur Ankupplung des Oberwagens werden hier jeweils zwei kreisrunde sich gegenüberliegende Stege vorgesehen, in denen auf Umfang gleichverteilt Bolzen steckbar aufgenommen sind, um eine Bolzenverbindung mit einem zwischen den Stegen aufnehmbaren Montageflansch des Unterwagens bzw. des Oberwagens herzustellen. Hierdurch ist die Schnellkupplung gebildet.

Gemäß einem anderen Aspekt der Erfindung wird die Schnellkupplung wie folgt gebildet: Zur Ankupplung des Unterwagens und/oder zur Ankupplung des Oberwagens sind an diese jeweils zwei kreisrunde sich gegenüberliegende Stege vorgesehen, in denen auf Umfang gleichverteilt Bolzen steckbar aufgenommen sind, um eine Bolzenverbindung mit einem zwischen den Stegen aufnehmbaren Montageflansch der Drehverbindung herzustellen.

Besonders vorteilhaft können auch die gesteckten Bolzen jeweils über eine Bolzensicherung sicherbar sein, was zur Betriebssicherheit des Krans beiträgt.

Weitere Einzelheiten und Vorteile der Erfindung werden anhand eines in der Zeichnung dargestellten Ausführungsbeispiels näher erläutert. Es zeigen:
- Figur 1:: eine perspektivische Darstellung einer Drehverbindung gemäß einer bevorzugten Ausführungsform der vorliegenden Erfindung,
- Figur 2:: eine wiederum perspektivische Darstellung der Drehverbindung gemäß Figur 1 aus einem anderen Blickwinkel,
- Figur 3:: eine Schnittdarstellung durch einen Teil der Drehverbindung gemäß der Figuren 1 und 2 und
- Figur 4:: die Drehverbindung gemäß der vorangegangenen Figuren eingepackt in einen Transportbehälter.

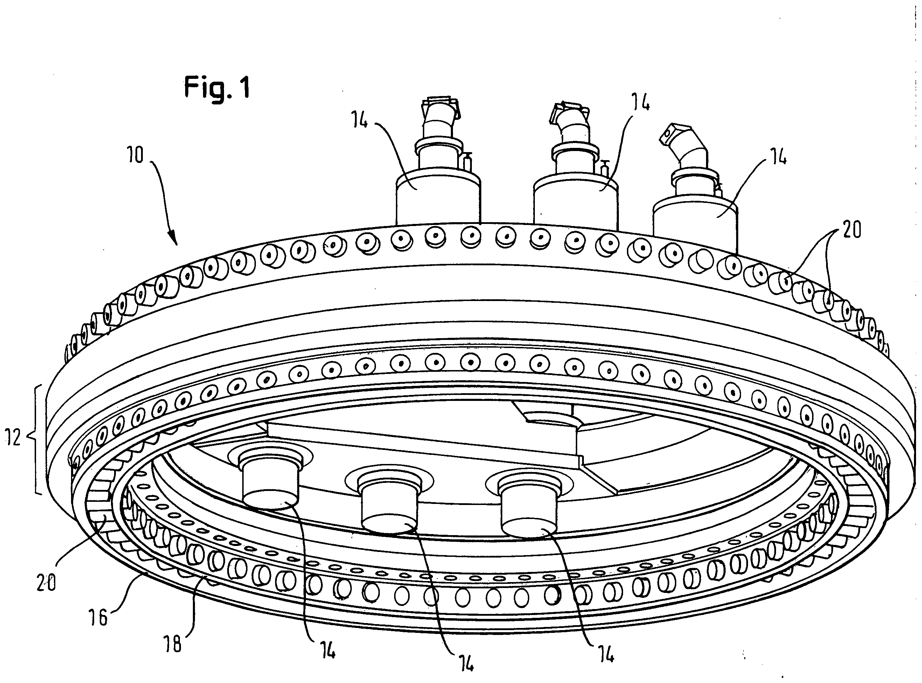

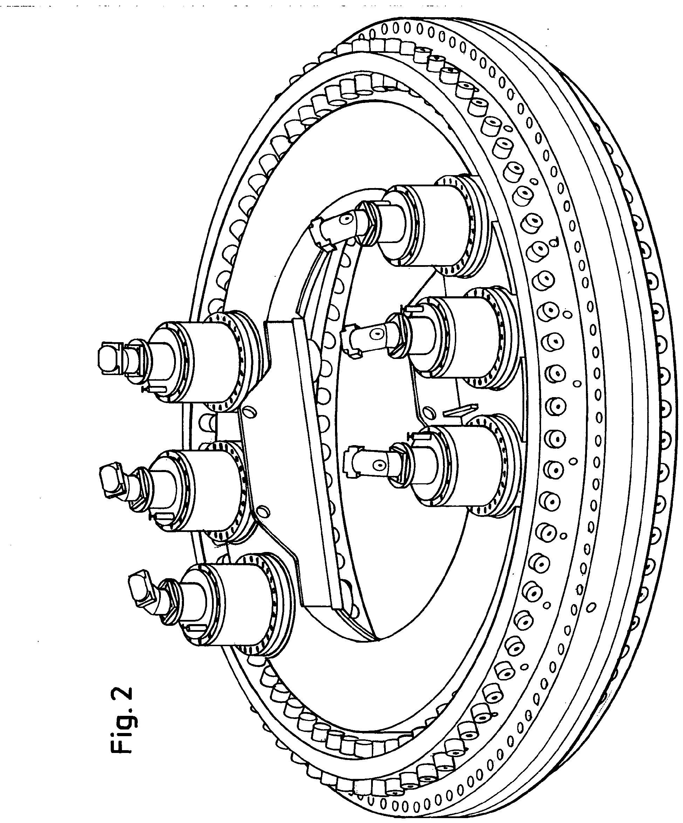

Wie aus den Figuren 1 und 2 ersichtlich, besteht die Drehverbindung 10 aus einem kreisrunden Rollendrehkranz. In hier nicht dargestellter Art und Weise kann über die Drehverbindung 10 ein nicht dargestellter Oberwagen mit einem nicht dargestellten Unterwagen verbunden werden. Zentrales Teil der Drehverbindung 10 ist die Rollendrehverbindung 12, die konventionell ausgeführt ist und daher keiner weiteren Beschreibung bedarf. Die Rollendrehverbindung weist sechs Antriebe 14 auf, die die benötigten Drehmomente bzw. Antriebsmomente erzeugen. Es handelt sich hier um Hydraulikantriebe, die in hier nicht näher dargestellter Weise über Hydraulikleitungen miteinander verbunden sind, so dass sie als Gesamteinheit mit den hier ebenfalls nicht dargestellten Hydraulikleitungen des Oberwagens verbunden werden können.

An die Rollendrehverbindung 12 schließen sich auf einer Seite zwei kreisrunde sich gegenüberliegende Stege 16 und 18 an, die parallel versetzt zueinander verlaufen. In den Stegen sind, wie sich aus den Figuren 1 und 2 ersehen läßt, auf Umfang gleichverteilt eine große Zahl von Bolzen 20 gesteckt, die über hier nicht näher gezeigte Bolzenzieheinrichtungen jeweils zurückziehbar sind. Zur Montage mit dem Unterwagen wird die Drehverbindung 10 auf dem Montageflansch des Unterwagens aufgesetzt, wobei der Montageflansch zwischen den Stegen 16 und 18 (in hier nicht dargestellter Art und Weise) positioniert wird. Anschließend werden die Bolzen gesteckt, wobei diese nicht nur die Wände 16 und 18, sondern auch den hier nicht näher dargestellten Montageflansch, der entsprechende Bohrungen aufweist, durchsetzen. Hierdurch wird eine sichere Montage der Drehverbindung mit dem Unterwagen bzw. dem Oberwagen des hier nicht näher dargestellten Krans ermöglicht.

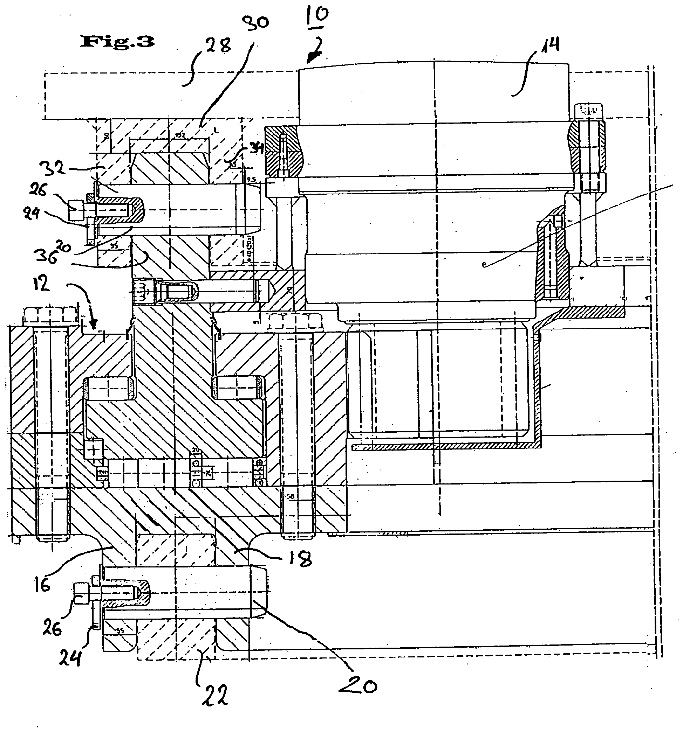

Die Verbindung mit einem Montageflansch 22 eines nicht näher dargestellten Unterwagens ergibt sich aus der Schnittdarstellung gemäß Figur 3. Hier ist ein Bolzen 20 durch die Stege 16 und 18 der Drehverbindung 10 und gleichzeitig durch eine entsprechende Bohrung des Flansches 22 des Unterwagens gesteckt. Der Bolzen ist über eine Bolzensicherung 24 gesichert, wobei diese Bolzensicherung 24 über eine Schraube 26 mit dem Bolzen verbunden ist.

Aus dem Schnitt gemäß Figur 3 ist auch der Aufbau der als solches bekannten Rollendrehverbindung 12 ersichtlich, der jedoch konventionell ist und daher an dieser Stelle nicht nochmals im einzelnen detailliert beschrieben wird.

Die Verbindung des hier nicht näher dargestellten Oberwagens mit seiner hier nur schematisch dargestellten Drehbühne 28 erfolgt im in Figur 3 dargestellten Ausführungsbeispiel dadurch, dass sich der Montageflansch 30 des Oberwagens in zwei seitliche kreisrund und parallel zueinander verlaufende Stege 32 und 34 gabelt, die einen ebenfalls kreisrunden Montagesteg 36 der Drehverbindung in der in Figur 3 dargestellten Art und Weise umschließen. Über die entsprechend gesteckten Bolzen 20, die wiederum über die Sicherung 24, 26 gesichert sind, werden die Stege 32 und 34 gegenüber dem Ring 36 festgelegt.

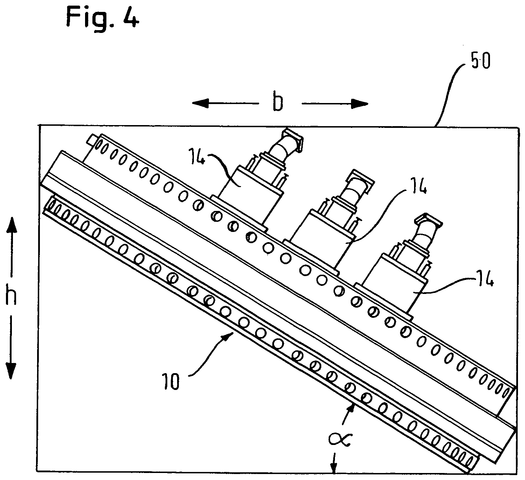

In Figur 4 ist die Drehverbindung im Transportzustand dargestellt. Die Drehverbindung kann als ganze Einheit, das heißt mit den montierten Antrieben 14, verladen werden. In einem Ausführungsbeispiel wiegt diese Baueinheit zusammen ca. 32 t und ist daher für den Straßentransport geeignet. Auch die Außenmaße sind auf den Straßentransport ausgelegt. So wird die gesamte Einheit 10 auf einer speziellen, hier nicht näher dargestellten Konsole aufgenommen, damit sie auf dem Transportmittel, beispielsweise dem Tieflader, um einen definierten Winkel α aufgerichtet transportiert werden. Diese Stellung erlaubt eine maximale Ausnutzung der zulässigen Begrenzungen, wie der Höhe h und der Breite b, die im Straßenverkehr vorgegeben sind.

## Patentansprüche

1. Drehverbindung zur drehbaren Verbindung des Oberwagens mit dem Unterwagen eines Kranes, wobei sie als kreisrunder Drehkranz ausgebildet ist und jeweils über eine Schnellkupplung mit dem Oberwagen einerseits und dem Unterwagen andererseits verbindbar ist,
**dadurch gekennzeichnet,**
**dass** als Schnellkupplung zur Ankupplung des Unterwagens und/oder zur Ankupplung des Oberwagens jeweils zwei kreisrunde sich gegenüberliegende Stege vorgesehen sind, in denen auf Umfang gleichverteilt Bolzen steckbar aufgenommen sind, um eine Bolzenverbindung mit einem zwischen den Stegen aufnehmbaren Montageflansch des Unterwagens bzw. des Oberwagens herzustellen.

2. Drehverbindung nach Anspruch 1, **dadurch gekennzeichnet, dass** sie als Rollendrehverbindung ausgebildet ist.

3. Drehverbindung nach Anspruch 1 oder 2, **dadurch gekennzeichnet, dass** als Antrieb mehrere hydraulische Antriebseinheiten auf ihr angeordnet sind.

4. Drehverbindung nach Anspruch 3, **dadurch gekennzeichnet, dass** die Antriebseinheiten untereinander verbunden sind.

5. Drehverbindung nach einem der vorhergehenden Ansprüche, **dadurch gekennzeichnet, dass** die gesteckten Bolzen jeweils über eine Bolzensicherung sicherbar sind.

6. Drehverbindung zur drehbaren Verbindung des Oberwagens mit dem Unterwagen eines Kranes, wobei sie als kreisrunder Drehkranz ausgebildet ist und jeweils über eine Schnellkupplung mit dem Oberwagen einerseits und dem Unterwagen andererseits verbindbar ist,
**dadurch gekennzeichnet,**
**dass** als Schnellkupplung zur Ankupplung des Unterwagens und/oder zur Ankupplung des Oberwagens an diese jeweils zwei kreisrunde sich gegenüberliegende Stege vorgesehen sind, in denen auf Umfang gleichverteilt Bolzen steckbar aufgenommen sind, um eine Bolzenverbindung mit einem zwischen den Stegen aufnehmbaren Montageflansch der Drehverbindung herzustellen.

7. Drehverbindung nach Anspruch 6, **dadurch gekennzeichnet, dass** sie als Rollendrehverbindung ausgebildet ist.

8. Drehverbindung nach Anspruch 6 oder 7, **dadurch gekennzeichnet, dass** als Antrieb mehrere hydraulische Antriebseinheiten auf ihr angeordnet sind.

9. Drehverbindung nach Anspruch 8, **dadurch gekennzeichnet, dass** die Antriebseinheiten untereinander verbunden sind.

10. Drehverbindung nach einem der vorhergehenden Ansprüche, **dadurch gekennzeichnet, dass** die gesteckten Bolzen jeweils über eine Bolzensicherung sicherbar sind.

## Claims

1. A rotary joint for the rotatable connection of the uppercarriage to the undercarriage of a crane, wherein it is configured as a circular slewing ring and via a quick-release coupling each is connectable to the uppercarriage on the one hand and to the undercarriage on the other hand,
**characterized in**
**that** as quick-release coupling for coupling the undercarriage and/or for coupling the uppercarriage two circular opposed webs each are provided, in which bolts are pluggably received equally distributed around the periphery in order to produce a bolt connection with a mounting flange of the undercarriage or the uppercarriage to be received between the webs.

2. The rotary joint according to claim 1, **characterized in that** it constitutes a roller rotary joint.

3. The rotary joint according to claim 1 or 2, **characterized in that** a plurality of hydraulic drive units are arranged on the same as a drive.

4. The rotary joint according to claim 3, **characterized in that** the drive units are connected to each other.

5. The rotary joint according to any of the preceding claims, **characterized in that** the inserted bolts each can be locked via a bolt locking device.

6. A rotary joint for the rotatable connection of the uppercarriage to the undercarriage of a crane, wherein it is configured as a circular slewing ring and via a quick-release coupling each is connectable to the uppercarriage on the one hand and to the undercarriage on the other hand,
**characterized in**
**that** as quick-release coupling for coupling the undercarriage and/or for coupling the uppercarriage to the same two circular opposed webs each are provided, in which bolts are pluggably received equally distributed around the periphery in order to produce a bolt connection with a mounting flange of the rotary joint to be received between the webs.

7. The rotary joint according to claim 6, **characterized in that** it constitutes a roller rotary joint.

8. The rotary joint according to claim 6 or 7, **characterized in that** a plurality of hydraulic drive units are arranged on the same as a drive.

9. The rotary joint according to claim 8, **characterized in that** the drive units are connected to each other.

10. The rotary joint according to any of the preceding claims, **characterized in that** the inserted bolts each can be locked via a bolt locking device.

## Revendications

1. Liaison rotative pour la connexion rotative du chariot supérieur au chariot inférieur d'une grue, dans laquelle elle est formée comme couronne rotative circulaire et peut être reliée au chariot supérieur d'une part et au chariot inférieur d'autre part par un raccord rapide,
**caractérisée en ce que**
comme raccord rapide pour l'accouplement du chariot inférieur et/ou pour l'accouplement du chariot supérieur deux nervures circulaires opposée l'une à l'autre sont prévues, dans lesquelles des boulons réparties uniformément sur la circonférence sont reçus d'une manière enfichable afin de produire un boulonnage avec une bride de montage du chariot inférieur et/ou du chariot supérieur pour être reçu entre les nervures.

2. Liaison rotative selon la revendication 1, **caractérisée en ce qu'**elle constitue une liaison rotative à rouleaux.

3. Liaison rotative selon la revendication 1 ou 2, **caractérisée en ce que** plusieurs unités d'entraînement hydraulique sont agencées sur celle-ci comme entraînement.

4. Liaison rotative selon la revendication 3, **caractérisée en ce que** les unités d'entraînement sont reliées entre eux.

5. Liaison rotative selon l'une quelconque des revendications précédentes, **caractérisée en ce que** les boulons enfichés peuvent être fixés chacun par un dispositif de fixation de boulon.

6. Liaison rotative pour la connexion rotative du chariot supérieur au chariot inférieur d'une grue, dans laquelle elle est formée comme couronne rotative circulaire et peut être reliée au chariot supérieur d'une part et au chariot inférieur d'autre part par un raccord rapide,
**caractérisée en ce que**
comme raccord rapide pour l'accouplement du chariot inférieur et/ou pour l'accouplement du chariot supérieur à celle-ci deux nervures circulaires opposée l'une à l'autre sont prévues, dans lesquelles des boulons réparties uniformément sur la circonférence sont reçus d'une manière enfichable afin de produire un boulonnage avec une bride de montage de la liaison rotative pour être reçu entre les nervures.

7. Liaison rotative selon la revendication 6, **caractérisée en ce qu'**elle constitue une liaison rotative à rouleaux.

8. Liaison rotative selon la revendication 6 ou 7, **caractérisée en ce que** plusieurs unités d'entraînement hydraulique sont agencées sur celle-ci comme entraînement.

9. Liaison rotative selon la revendication 8, **caractérisée en ce que** les unités d'entraînement sont reliées entre eux.

10. Liaison rotative selon l'une quelconque des revendications précédentes, **caractérisée en ce que** les boulons enfichés peuvent être fixés chacun par un dispositif de fixation de boulon.
